(19) Europäisches Patentamt
European Patent Office
Office européen des brevets

(11) EP 4 571 599 A1

(12) EUROPEAN PATENT APPLICATION

(43) Date of publication:
18.06.2025 Bulletin 2025/25

(51) International Patent Classification (IPC):
G06N 10/60 (2022.01)        G06N 10/70 (2022.01)

(21) Application number: 24169733.3

(52) Cooperative Patent Classification (CPC):
G06N 10/60; G06N 10/70; G06N 10/40

(22) Date of filing: 11.04.2024

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 15.12.2023 EP 23217155

(71) Applicant: Kipu Quantum GmbH
76137 Karlsruhe (DE)

(72) Inventors:
• PERSEGUERS, Sébastien
1700 Fribourg (CH)

• de OLIVEIRA, Murilo
12249 Berlin (DE)
• SOLANO, Enrique
10405 Berlin (DE)
• ZHANG, Qi
10437 Berlin (DE)
• TRAUTMANN, Jan
69115 Heidelberg (DE)

(74) Representative: Sonnenberg Harrison
Partnerschaft mbB
Herzogspitalstraße 10a
80331 München (DE)

(54) **METHOD FOR SOLVING A COMBINATORIAL OPTIMIZATION PROBLEM**

(57) The invention refers to a combinatorial optimization problem encoding method that can be applied to different types of hardware. It optimizes the use of the available qubits while facilitating parallel operations, thereby significantly reducing circuit depth. The method also may comprise a majority vote or an energy postselection of states on measurements, demonstrating an error correction behavior, responsible for higher ground state population.

The method enhances quantum computation efficiency and allows the better exploitation of hardware capabilities, while staying within the coherence time of such systems.

Figure 6

## Description

The invention relates to quantum computing, in particular to digital quantum computing. Certain embodiments are defined by the appended independent and dependent claims.

The invention relates to a novel combinatorial optimization problem encoding method that can be applied to different hardware. Examples of such combinatorial optimization problem are the quadratic unconstrained binary optimization (QUBO) and the higher-order unconstrained binary optimization (HUBO) problems. It optimizes the use of the available qubits while facilitating parallel operations, thereby significantly reducing circuit depth. In certain embodiments, the method also comprises an error correction, for example, a majority vote performed on the measured states or a post-selection of states depending on their energy, responsible for higher ground state population.

The method enhances quantum computation efficiency and allows the better exploitation of hardware capabilities, while staying within the coherence time of such systems.

The method of the invention may be referred to as circuit unknitting, a novel approach to quantum computation, contrasting the established method of circuit-knitting. Instead of aiming to accommodate larger and larger problems in quantum hardware, circuit unknitting focuses on efficiently fitting smaller problems into the available hardware, making use of all qubits while in some embodiments intrinsically providing an error mitigation.

## Background of the Invention

Digital quantum computing represents a big paradigm shift from the traditional classical computing, using qubits instead of standard bits. These qubits are capable of being in a state of superposition, having a probability of being both 0 and 1 states simultaneously, and are capable of entanglement, which establishes a quantum connection beyond classical bit capabilities. This plays an important role in the development of quantum algorithms that outperform classical ones.

Quantum computers operate via quantum circuits and gates, which manipulate qubits to execute algorithms that have the potential to outperform classical computing. The coherence time of these qubits is a key consideration, as it defines the duration, they can maintain their quantum state before external influences cause decoherence. Therefore, the time window for effective quantum computing is limited by this coherence time.

The circuit depth in quantum circuits, which accounts for the number of sequential gate operations, becomes important given the constraints of coherence time. Reducing circuit depth is essential for completing computations before qubits decohere, especially in complex tasks like combinatorial optimization problems.

In addition to these concerns, digital quantum computing also involves aspects like the Trotterization process in digital adiabatic quantum computing. This process breaks down the continuous time evolution of a Hamiltonian into discrete steps in a sequence of quantum gates, bridging the gap between digital and adiabatic quantum computing. This methodology allows to simulate adiabatic processes using digital quantum computing techniques.

Moreover, the measurement process in digital quantum computing is crucial for extracting information from quantum systems. After processing through the quantum circuit, the state of each qubit is measured, leading to the collapse of its superposition state into a definitive state of either 0 or 1. This measurement is probabilistic and crucial for transforming quantum information into a classical form that can be interpreted and utilized.

The invention introduces a new method for combinatorial optimization problems to reduce the circuit depth necessary for these computations. This reduction in quantum gate operations aligns the execution of quantum algorithms with the available coherence time, improving the feasibility and reliability of quantum computations. Furthermore, this reduction in circuit depth ensures that quantum algorithms become more accessible on existing quantum hardware, where coherence times are limited.

## Short Description of the Invention

This summary is provided to introduce a selection of concepts in a simplified form that are further described below in the detailed description and the examples. This summary is not intended to identify key features of the invention, nor is it intended to be used to limit the scope of the invention.

The object of the invention is to provide an improved method for solving a combinatorial optimization problem using a digital quantum computer.

This object is achieved by the present invention, for example by the features of the appended claims. Further embodiments and examples are apparent from the dependent claims, the detailed description, and the accompanying drawings of the figures.

In a first aspect, the invention pertains to a computer-implemented method for solving a combinatorial optimization problem with a given digital quantum computer (also referred to as digital quantum hardware).

In certain embodiments of the invention, the method comprises the following steps:

- providing the combinatorial optimization problem in a quadratic unconstrained binary optimization (QUBO) matrix or in a higher-order unconstrained binary optimization (HUBO),

- providing at least two subsystems by distributing the number of qubits available on the quantum computer hardware equally into at least two groups, wherein the number of subsystems and the number of groups is identical,

- encoding the combinatorial optimization problem from the QUBO matrix or the higher-order unconstrained binary optimization (HUBO) in a distributed form across the at least two subsystems such that the encoding minimizes the number of two-qubit gates using the same qubit of the same subsystem,

- introducing at least one constraint for qubits that force the state of each qubit present in the digital quantum computer hardware to be the same across each of the at least two subsystems,

- performing an adiabatic quantum computation, thereby building a time dependent Hamiltonian that starts in a ground state of an initial Hamiltonian,

- evolving the initial Hamiltonian adiabatically into a final Hamiltonian, whose ground state corresponds to the result of the problem,

- measuring a state of the qubits, wherein each qubit state is projected into a 0 or 1,

- performing an error correction using an error correction algorithm, and

- obtaining the solution to the combinatorial optimization problem.

The method of the invention, in particular the adiabatic quantum computation and the measurement, are performed in a quantum computer. In certain embodiments, the method is simulated in a classical computer.

In certain embodiments of the method, the combinatorial optimization problem is provided in a quadratic unconstrained binary optimization (QUBO) matrix or a higher-order unconstrained binary optimization (HUBO) matrix by minimizing a Hamiltonian with quadratic or higher-order terms such that the quadratic unconstrained binary optimization (QUBO) matrix or the higher-order unconstrained binary optimization (HUBO) matrix can be formulated.

The encoding and distribution of the QUBO or HUBO matrix elements across the subsystems may be given by Eqs. (3) and (13), respectively, described below. In the process of creating a quantum circuit that can be run in a quantum computer simulator or a real quantum computer, the encoding and distribution of the matrix elements across the subsystems is done by a classical computer.

In certain embodiments of the method, an encoding of the combinatorial optimization problem from the QUBO or HUBO matrices while creating the Hamiltonian into a particular Ising formulation like, for example, in Eq. (8) is given below.

The Hamiltonian H(t) is time-dependent. At the initial time, e.g. $t_i$, $H(t_i) = H_i$ which is the initial Hamiltonian. At the end of the computation, $t_f$, $H(t_f) = H_f$, the final Hamiltonian.

In certain embodiments, the time-dependent Hamiltonian is:

$$H(t) = (1-f(t))^*H_i + f(t)^*H_f,$$

with f(t) being the scheduling function with boundary conditions $f(t_i) = 0$ and $f(t_f) = 1$.

In certain embodiments of the method, at least two subsystems are provided by distributing at least a portion the number of qubits available on the quantum hardware equally into at least two groups, wherein the number of subsystems and the number of groups is identical.

When providing subsystems, not all qubits need to be used. It is also possible to distribute a portion of the number of qubits available. In certain embodiments, the system is divided into subsystems with each subsystem having the same number of qubits. In order to use the hardware resources to the maximum in the method of the invention, all available qubits are distributed.

The actual distribution of qubits on subsystem may depend on the problem size and how many qubits are available on a hardware system. For example, if 20 qubits are available and a problem of size 5 is to be solved, harvesting the maximum of the hardware, 4 subsystems are generated with 5 qubits each. Alternatively, for example, one could generate 3 subsystems of 5 qubits each and leave 5 qubits unused.

In certain embodiments, the error correction algorithm used in the method is selected from the group consisting of:

- a majority vote on the measured state of each qubit across all subsystems, and

- a post-selection based on the energy of each of the at least two subsystem's final state, selecting the lowest energy state as the result.

The majority vote is used with or without weights in different embodiments.

In certain embodiments of the method of the invention, the encoding minimizes the number of two-qubit gates using the same qubit of a given subsystem, thereby reducing the circuit depth. Therefore, the number of multi-qubit gates that can be applied simultaneously in each step of the computation is maximized.

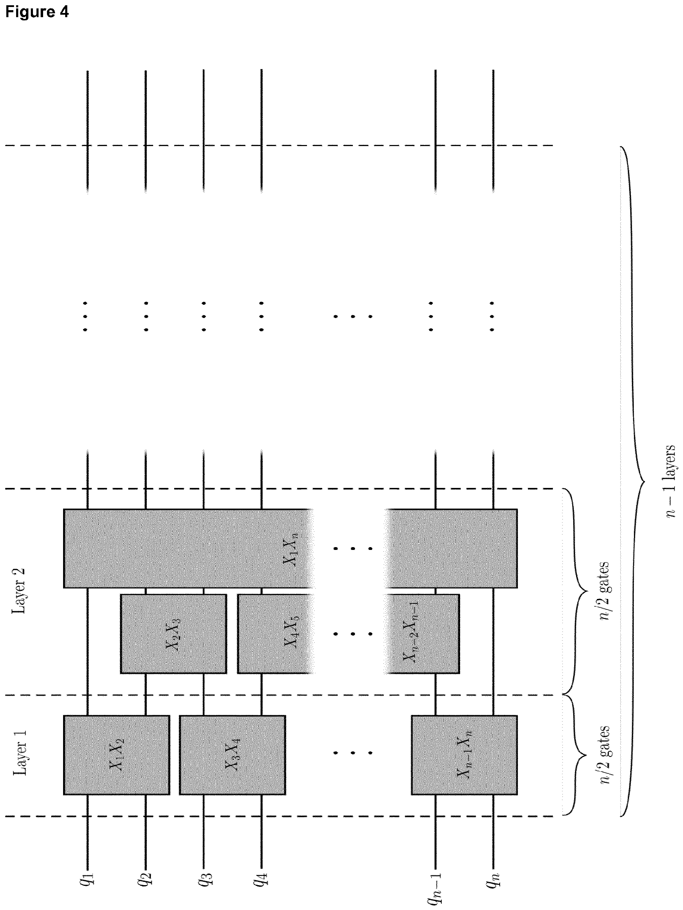

The digitized adiabatic computation starts from the initial Hamiltonian and evolves the system to a final Hamiltonian, which is translated into a quantum circuit. In this, a standard approach known in the art, some approximations are made. The step of computation refers to the layers of the quantum circuit, as mentioned in the description below and indicated in Fig. 4. A number of parallel gates is used per layer.

In the usual encoding, one has n qubits available, and in the circuit unknitting method one has n $\times$ m qubits available. In each layer, one can only apply one operation to each qubit. In certain embodiments of this method, two-qubit gates are applied, so the maximum number of gates per layer in the usual encoding is $n/2$, while in the present circuit unknitting, $(n \times m)/2$ is applied. This is further described below while deriving Eqs. (10) and (11).

In certain embodiments of the method of the invention, it is implemented on a single processor. In other embodiments, the method is implemented on a at least two processors, wherein each of the at least two processors harbors one and only one subsystem. In other words, multiple chips are used, and each chip plays the role of a subsystem.

A processor may be a superconducting circuit chip, in particular with a high number of qubits, like more than 300 qubits, for example with around 450 qubits.

In certain embodiments of the method of the invention, the at least two processors are connected to each other via a quantum link, which is, in some embodiments, an optical fiber. This is advantageous when scaling quantum hardware for a large number of qubits.

In certain embodiments, the present method of circuit unknitting uses direct interactions between the subsystems to impose the qubit equality constraints. In certain embodiments, quantum links are used. Based on the use of quantum links, each subsystem is an entire processor/chip in certain embodiments. Then, the constraints can be applied through a quantum link, e.g. an optical fiber.

In certain embodiments of the method of the invention, the digital quantum computer uses superconducting circuits or trapped ions.

In a second aspect, the invention pertains to a data processing apparatus/device/system comprising means for carrying out [the steps of] the method described herein.

In a third aspect, the invention pertains to a computer program [product] comprising instructions which, when the program is executed by a computer, cause the computer to carry out [the steps of] the method described herein.

In a fourth aspect, the invention pertains to a computer-readable [storage] medium comprising instructions which, when executed by a computer, cause the computer to carry out [the steps of] the method described herein.

Other features and advantages of the invention will be apparent upon reading the detailed description and examples and reviewing the accompanying drawings of the figures.

## Detailed Description of the Invention

Various embodiments of the invention are further described in more detail with reference to the accompanying drawings. However, the invention may be embodied in many other forms and should not be construed as limited to any certain structure or function discussed in the following description.

According to the description, it will be apparent to the ones skilled in the art that the scope of the invention encompasses any embodiment thereof, which is disclosed herein, irrespective of whether this embodiment is implemented independently or in concert with any other embodiment of the invention. For example, the method disclosed herein may be implemented in practice by using any numbers of the embodiments provided herein. Furthermore, it will be understood that any embodiment of the invention may be implemented using one or more of the elements presented in the appended claims.

Quantum optimization algorithms are quantum algorithms that are used to solve optimization problems.

Quantum computing is an area in technology that could solve complex problems, which classical computers cannot handle. One of the key methods in this field is called Adiabatic Quantum Computing (AQC). AQC is usually applied for solving optimization problems by using the way quantum systems naturally behave. It is based on the adiabatic theorem, states that a quantum system will remain in its ground state if the system's Hamiltonian changes slowly enough and if there are no energy level crossings. So, one can start a system in a state which is simple and easy to prepare and let it evolve to a complex final one. This can be used to solve problems if they can be encoded in the system at hand. The creation of quantum annealers shows how useful AQC is, providing tools for specific kinds of problems. However, AQC can be slow and requires maintaining quantum states for a long time, which is challenging with current technology.

Digitized adiabatic quantum computing combines AQC with digital quantum computers, making AQC more flexible and useful on different types of quantum computers. It is a big step in making quantum computing more powerful and universal, since it allows us to tackle problems that cannot be naturally encoded in the system's Hamiltonian. But digitizing AQC can add complexity and errors that propagate, requiring error correction, which can be difficult to achieve with the current hardware.

This leads to Digitized Quantum Optimization. The problem to be optimized is encoded into a quantum circuit using quantum bits (qubits). The quantum circuit is designed in such a way that the lowest energy state of the system represents the optimal solution to the problem. The downside is that these digital systems, like mentioned above, can be limited by the number of qubits and error rates, which can make them less reliable for very complex problems.

Another optimization method is the Quantum Approximate Optimization Algorithm (QAOA). In QAOA, quantum states are manipulated in a series of steps, with each step involving quantum operations followed by measurements. These measurements inform classical adjustments in a feedback loop, refining the approach towards an optimal solution. However, QAOA faces several limitations: the need for precise quantum gates, the impact of noise on quantum systems, and notably, the feedback-loop overhead. This overhead, the time and resources required for the continuous cycle of quantum measurements and classical adjustments, can significantly slow down the algorithm.

Circuit-Knitting is a technique in quantum computing that addresses some of the previously mentioned limitations of current hardware by breaking down large-scale quantum algorithms into smaller pieces. This approach allows the execution of complex algorithms on existing quantum systems, which might otherwise be too limited in terms of number of qubits count and coherence time to handle such complex tasks directly. However, it comes with its own challenges. Building these smaller components and ensuring they work together seamlessly is an extremely difficult task. Additionally, the process of classically integrating these smaller circuits, introduces complexity and potential points of failure, which can affect the efficiency and reliability of the final quantum computation.

The invention, introduces the idea of circuit unknitting. Instead of trying to solve large complex problems involving a great number of qubits, like, for example, up to 450 qubits, this invention takes a different approach, i.e. to use the presently available hardware to tackle smaller problems. By spreading out the work across different parts of a given hardware (system), the invention reduces how deep the circuits are. Answers are obtained faster and better use is made of the quantum computers available today.

In a system with a total of $N$ qubits, these qubits can be partitioned into $m$ groups, which will be referred to as subsystems, based on the requirements of the problem at hand. The main objective is to optimize the use of available qubits. So, for a given problem size, can directly fix a number $n$ of qubits per subsystem. The ideal scenario is to fully utilize the entire quantum system, this means ideally arranging the qubits such that the product of the number of subsystems ($m$) and the number of qubits per subsystem ($n$) equals the total number of qubits available ($N$), i.e., $n \times m = N$. This ensures maximal utilization of the quantum resources at hand.

In certain embodiment, all the qubits of the hardware are distributed equally over at least two subsystems. The number of subsystems can be adjusted to maximize the use of the available qubits in the hardware, depending on the size of the problem to be solved. In certain embodiments, the number of subsystems lies between 2 and 12, in particular between 3 and 9.

Subsystems are groups containing the same number of qubits. In certain embodiments of the method, the way that the QUBO or HUBO matrices are encoded in the hardware and divided between these subsystems involves an encoding that minimizes the number of two-qubit gates using the same qubit of a subsystem, which means that instead of waiting for one two-qubit gate involving a qubit 1 to finish to apply the next, one can apply one in qubit 1 of subsystem 1 and another qubit 1 of subsystem 2. This reduces the lengths of the quantum circuits, since one can perform more operations at the same time (in parallel).

The encoding can be optimized depending on the hardware and the connectivity between qubits that is available there.

The term parallel gates is referring to gates that can be applied at the same time.

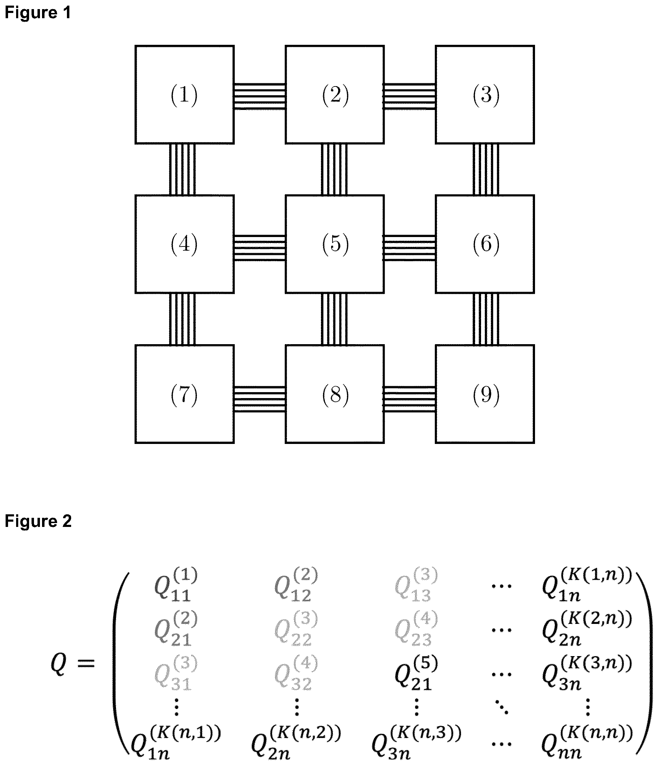

A layer in a quantum circuit can be seen as a set of quantum gates that are applied at the same time or in the same step of the computation. For a visual representation, see the figure 1.

For example, having access to a total of $N$ = 450 physical qubits, one could divide them in $m$ = 9 subsystems containing $n$ = 50 qubits each, as depicted in Fig. 1. The objective is to distribute the $\frac{n(n-1)}{2}$ gates across the m subsystems, in a way that instead of the usual encoding, where the cost function reads

$$f(x) = \sum_{i \leq j} Q_{ij}\, x_i x_j, \qquad (1)$$

with $Q_{ij}$ being the elements of the QUBO matrix associated with the problem and $x_i$ binary variables, the QUBO matrix would be written as

$$Q = \begin{pmatrix} Q_{11}^{(1)} & Q_{12}^{(2)} & Q_{13}^{(3)} & \cdots & Q_{1n}^{(K(1,n))} \\ Q_{21}^{(2)} & Q_{22}^{(3)} & Q_{23}^{(4)} & \cdots & Q_{2n}^{(K(2,n))} \\ Q_{31}^{(3)} & Q_{32}^{(4)} & Q_{21}^{(5)} & \cdots & Q_{3n}^{(K(3,n))} \\ \vdots & \vdots & \vdots & \ddots & \vdots \\ Q_{1n}^{(K(n,1))} & Q_{2n}^{(K(n,2))} & Q_{3n}^{(K(n,3))} & \cdots & Q_{nn}^{(K(n,n))} \end{pmatrix}, \qquad (2)$$

which means that each element of the QUBO matrix is in the end assigned to a $k$-th subsystem, which in this encoding is given by

$$K(i,j) = \mod(i + j - 2, m) + 1, \qquad (3)$$

which is also depends on the number of subsystems $m$. With this definition, with respect to certain embodiments, one can rewrite Eq. (1) as

$$f(x) = \sum_{i \leq j} \sum_{k=1}^{m} Q_{ij}\, \delta\big(k, K(i,j)\big) x_i^{(k)} x_j^{(k)}. \qquad (4)$$

In other embodiments, the elements are distributed in a different way, for example also taking into account the coupling maps of the already available hardware to reduce the number of required SWAP gates. However, in the embodiments described here to circuit unknitting, the number of two-qubit gates involving the same qubit is minimized, which is accomplished in certain embodiments by assigning each anti-diagonal of the QUBO matrix to one of the subsystems, like indicated by the different colors in Fig. 2.

After that, the only thing left to do is ensure that all the subsystems have the same ground state. That can be done by introducing qubit-equality constraints across the subsystems, e.g. $x_i^{(k)} = x_i^{(l)}$, with $k$ and $l$ being nearest neighbour subsystems. In the scheme shown in Fig. 1, these constraints would add $12n$ terms to the cost function, which now reads

$$f(x) = \sum_{i \leq j} \sum_{k=1}^{m} Q_{ij}\, \delta\big(k, K(i,j)\big) x_i^{(k)} x_j^{(k)} + \sum_{\{k,l\} \in E} \sum_{i=1}^{n} \Lambda_i \left( x_i^{(k)} - x_i^{(l)} \right)^2, \qquad (5)$$

wherein

$E$ are the edges in the graph composed by the subsystems, with
$k,l$ representing the subsystems connected by this edge, and
$\Lambda_i$ is the constraint parameters that needs to be adjusted to ensure equality between respective qubits across the subsystems.

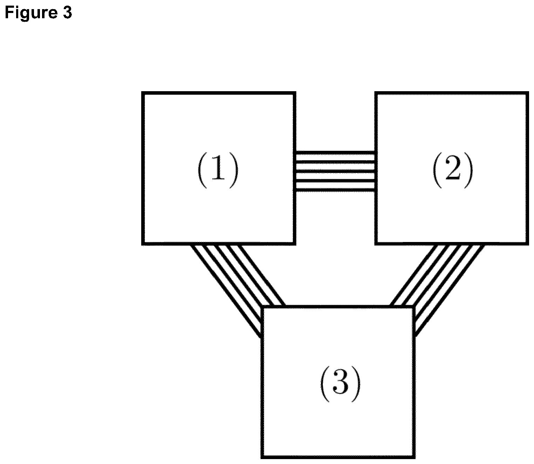

As an example, let us then consider a small-scale system composed by $m = 3$ subsystems of $n$ qubits each, like shown in Fig. 3. The objective function that is to be minimized for this problem can be written as

$$\mathcal{F} = \sum_{i \leq j}^{n} \sum_{k=1}^{m} Q_{ij}\, \delta(k, \mathrm{mod}(i+j-2, m)+1)x_i^{(k)}x_j^{(k)} + \sum_{k<l}^{m} \sum_{i=1}^{n} \Lambda_i \left(x_i^{(k)} - x_i^{(l)}\right)^2. \quad (6)$$

To translate this to an Ising formulation, the relation $Z = 1 - 2x$ is used, with $Z$ being the spin operator. Substituting this in Eq. (6), one obtains

$$\mathcal{F} = \sum_{i \leq j}^{n} \sum_{k=1}^{m} Q_{ij}\, \delta_{kijm} \frac{\left(1 - Z_i^{(k)}\right)}{2}\frac{\left(1 - Z_j^{(k)}\right)}{2} + \sum_{i=1}^{n} \sum_{k<l}^{m} \Lambda_i \left(\frac{\left(1 - Z_i^{(k)}\right)}{2} - \frac{\left(1 - Z_i^{(l)}\right)}{2}\right)^2,$$

$$(7)$$

which can be simplified to

$$\mathcal{F} = \sum_{i \leq j}^{n} \sum_{k=1}^{m} \frac{Q_{ij}}{4} \delta_{kijm} \left(Z_i^{(k)}Z_j^{(k)} - Z_i^{(k)} - Z_j^{(k)} + 1\right) - \frac{1}{2}\sum_{k<l}^{m} \sum_{i=1}^{n} \Lambda_i \left(Z_i^{(k)}Z_i^{(l)} - 1\right). \quad (8)$$

In terms of number of gates, circuit unknitting is in disadvantage. This is due to the fact that in addition to the operations required to solve the initial problem, the constraints are introduced. In total, the system deals, in this case, with

$$M = \frac{n(n-1)}{2} + n_E n \quad (9)$$

two-qubit operations, with $n_E \times n$ more gates than needed when using the usual encoding, where $n_E$ is the number of edges $E$, i.e. the total number of connections between the subsystems.
However, the distribution of operations across the subsystems allows a reduction of the final circuit depth, since more operations can be done in parallel, compensating, for sufficiently large subsystems, the additional gates that ensure qubit state-equality.
The lowest circuit depth regarding only two-qubit operations, neglecting the SWAP gates, in an all-to-all connectivity, can be estimated by dividing the total number of two-qubit gates by the total number of parallel operations that can be performed in a single layer. In the usual encoding, this leads to

$$d_{usual} = \frac{n(n-1)/2}{n/2} = (n-1), \quad (10)$$

since only $n/2$ two-qubit gates can be applied in parallel, like shown in Fig. 4. On the other hand, circuit unknitting can perform $nm/2$ parallel two-qubit gates, resulting, in the case where the subsystems are in a square grid configuration, like shown in Fig. 1, in

$$d_{unk} = \frac{n(n-1)/2}{nm/2} + \Delta = \frac{(n-1)}{m} + \Delta, \quad (11)$$

where the additional $\Delta$ layers account for the constraints, with $\Delta$ being the maximum degree of the graph composed by considering the subsystems as nodes, i.e. the maximum number of connections between a single subsystem and its neighbors, corresponding to the minimum number of layers required to apply the constraints.
From equations (10) and (11) it follows that for a sufficiently large n, circuit unknitting can drastically reduce the circuit depth of the circuits.
In certain embodiments, the method of the invention is applied to higher-order problems that can be expressed in a HUBO formulation in a similar way.
In the context of optimization and computational mathematics, a higher-order problem, when expressed in a HUBO formulation, involves an objective function that is a polynomial of binary variables $x_i$ where $i$ ranges over the set of variables involved in the problem.

The distribution of a third order HUBO tensor elements across the $m$ available subsystems renders a cost function similar to the one in Eq. (5) that can be written as

$$f(x) = \sum_{i<j<l} \sum_{k=1}^{m} T_{ijl}\, \delta\big(k, K'^{(i,j,l)}\big) x_i^{(k)} x_j^{(k)} x_l^{(k)} + \sum_{E} \sum_{i=1}^{n} \Lambda_i \left( x_i^{(k)} - x_i^{(l)} \right)^2, \quad (12)$$

with $T$ being the HUBO matrix, and

$$K'(i, j, l) = \mod{(i + j + l - 3, m)} + 1, \qquad (13)$$

being a generalization of Eq. (3) for three-body interactions, leading to a similar encoding across the subsystems as before, i.e. presenting the same anti-diagonal distribution as Eq. (2) and Fig. 2 for any fixed index.

The minimum circuit depth, neglecting the SWAP gates, can be estimated for a general order HUBO problem, given that the number of multi-qubit gates of a fully connected problem, i.e. with no zero elements, can be obtained via binomial coefficients. The number of gates necessary to perform the connections between $n$ qubits, using $p$-qubit gates is the binomial coefficient arranging combinations of $n$ elements, $p$ by $p$, which is given by

$$M = \frac{n!}{p!\,(n-p)!}. \quad (14)$$

Since the usual method of encoding can only perform $n/p$ parallel $p$-qubit gates, the circuit depth related to the $p$-qubit operations is estimated as

$$d_{usual} = \frac{(n-1)!}{(p-1)!\,(n-p)!}, \qquad (15)$$

where, on the other hand, circuit unknitting can perform $nm/p$ parallel $p$-qubit gates, resulting in

$$d_{usual} = \frac{(n-1)!}{m(p-1)!\,(n-p)!} = \frac{d_{usual}}{m}, \qquad (16)$$

with $\Delta$ being the previously defined number of layers required to perform the constraints related gates. This means that keeping the same constraints, circuit unknitting can reduce the circuit depth compared to the usual encoding when the subsystems' sizes is scaled up.

Finally, the measurements in circuit unknitting may be subject to an error correction algorithm or mechanism. For example, after measuring the entire system, the counts can be converted for each $n \times m$ bitstring into a $n$ sized one by performing, for example, a majority vote or a post-selection based on the energy of the states. The majority vote could be, for example, a simple majority vote that only takes into account the frequency of the measurements, or a weighted majority vote

Errors are likely to occur in at least one of the subsystems during the computation or measurement, but by applying a majority vote, i.e. taking the most frequently measured bit at each position across all subsystems, one can statistically filter out the errors. This means that if a single subsystem's measurement is wrong at a certain bit position, the correct state can still be achieved due to the remaining subsystems' measurements. The majority vote is implemented in certain embodiments using weights in the selection of the final qubit state, depending on the state energy, on the evaluated cost function from Eq. (8) or the absolute frequency of that measurement in the whole ensemble of measurements.

Another alternative is to use the post selection of states to filter out the eventual errors. In this case, the observed state is divided into a set of the subsystem's states. Subsequently, the energy for each state in this set is computed. The state that exhibits the lowest energy is then chosen as the definitive state.

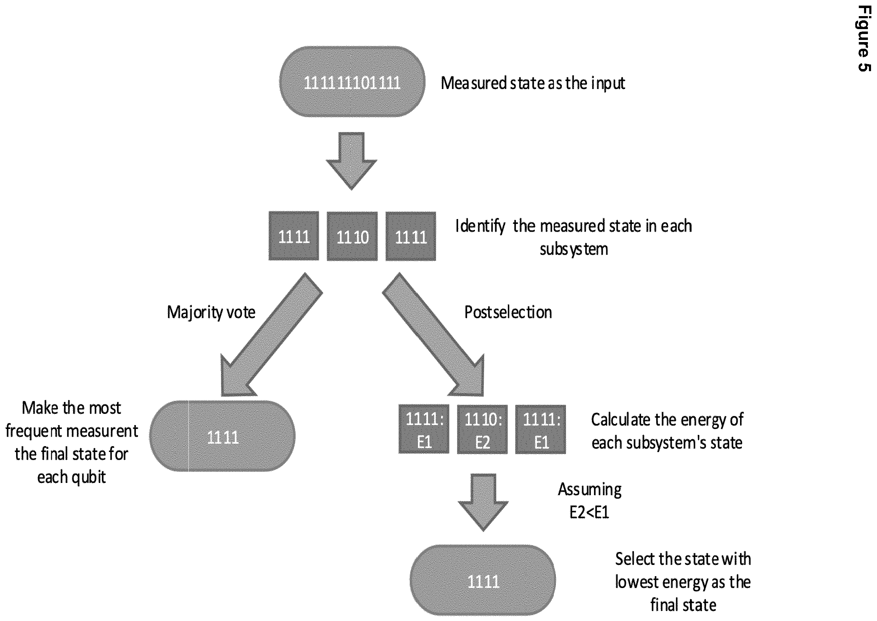

For a system with $m$ = 3 subsystems and $n$ = 4 qubits in each subsystem, the majority vote and the post-processing will act as shown in the scheme of Fig. 5, with the error in the second subsystem's fourth bit being outvoted by the correct bits from the first and the third subsystems when using a majority vote, and by directly selecting the lowest energy state in the post-selection.

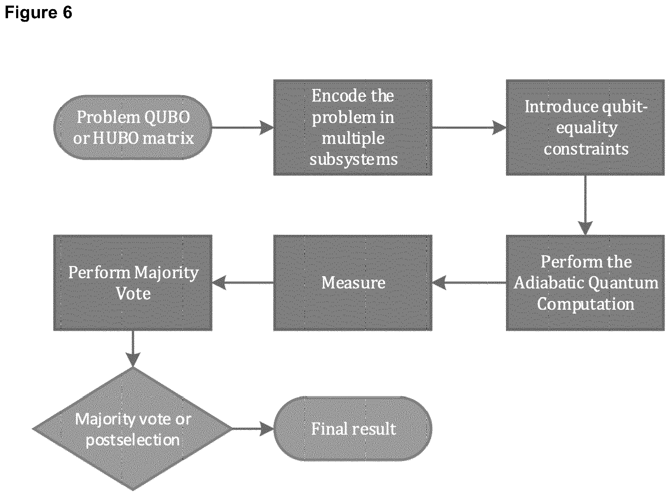

Embodiments of the circuit unknitting method of the invention are represented in the chart in Fig. 6, which shows steps of the invention in order, from getting a QUBO or HUBO problem to obtaining the final result.

**Examples**

To test embodiments of the method of the invention, numerical simulations were performed on a classical computer, where one is limited to around 20 qubits due to the computational overhead. However, since circuit unknitting has been expected to outperform the conventional encoding as the system size is scaled, this could be a limiting factor of the method in the current analysis. All the simulations presented here were performed using a custom noisy backend, an all-to-all connected coupling map to avoid SWAP gates. In certain embodiments of the invention, SWAP gates, which connect qubits between different subsystems in the hardware, are not used.

Qubit-equality constraints

A crucial part of the method consists in the ability to choose the right constraint values. This depends on the initial QUBO matrix, on the system and subsystem size, i.e. n and m, and can also depend on the noise in the system.

For small systems, one could in principle find the individual near-optimal constraint weights $\Lambda_i$ from Eq. (8), or a single common value of $\Lambda$, by looking at the ground state energy as scanning over the constraint values, or even via a minimization of a metric, such as the approximation ratio or the ground state occupancy.

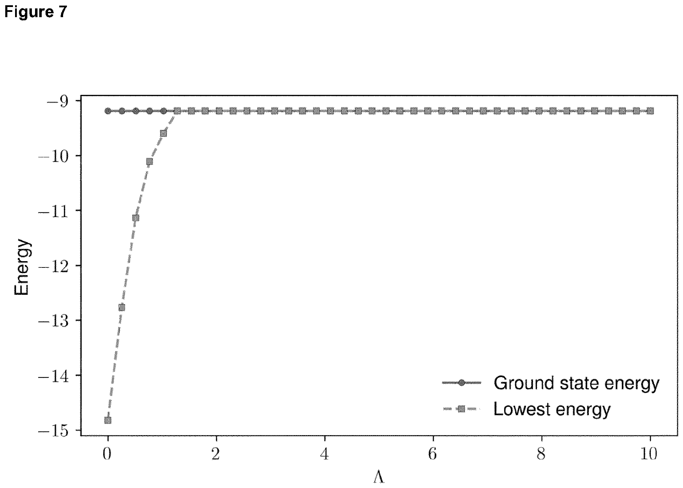

During the analysis carried out, the inventors looked at the lowest energy obtained with the unknitted system in an adiabatic quantum simulation and compare it with the ground state energy of the original problem as $\Lambda$ was varied like shown in Fig. 7. This plot was obtained for $n = 6$ and $m = 3$, performing an adiabatic evolution using our custom noisy backend. In this case, the best choice is to pick a value close to the point where both energies coincide, e.g. $\Lambda \approx 1$.

Circuit depth

According to equations (10) and (11), it is possible to find a setting with a certain $m$ and $n$ for which circuit unknitting provides a shorter circuit depth.

As an example, let us consider again the setup depicted in Fig. 3. In this case, the number of two-qubit gates as a function of $n$ for circuit unknitting is given by

$$M = \frac{n(n-1)}{2} + 3n, \quad (17)$$

and the lowest circuit depth for these operations can be estimated to be

$$d_{unk} = \frac{(n-1)}{3} + 3. \quad (18)$$

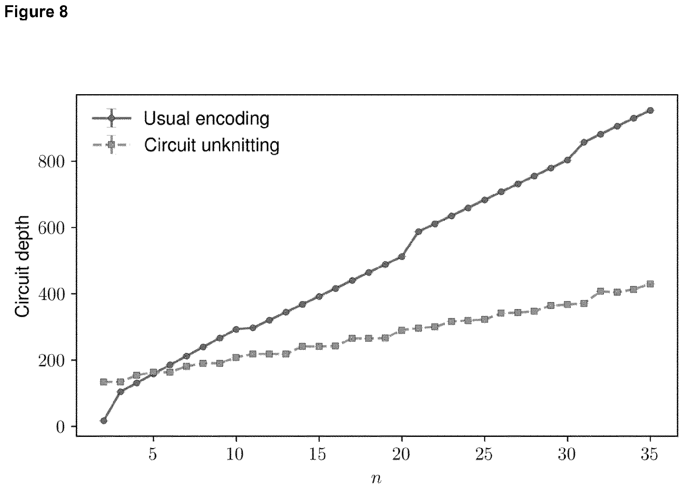

Comparing this circuit depth to the one from Eq. (10), it is to be tested that for $n > 6$, one can achieve smaller circuit depths with circuit unknitting than with the usual encoding. To test this, the quantum circuits for both methods are prepared and the circuit depth is measured as a function of the number of qubits n in each subsystem. The results can be seen in Fig. 8, where 8 Trotter steps have been considered. This shows the advantage of circuit unknitting in the reduction of the circuit depths when compared to the usual encoding schemes.

Quantum simulation

Finally, the results of a quantum optimization problem are evaluated by contrasting scenarios with and without the application of embodiments of the circuit unknitting method of the invention. This comparison also considers the use of either majority vote or post-selection based on energy, simulated in our custom backend. Three subsystems with 6 qubits in each are used. For this particular example, the ground state solution was the bitstring 111111.

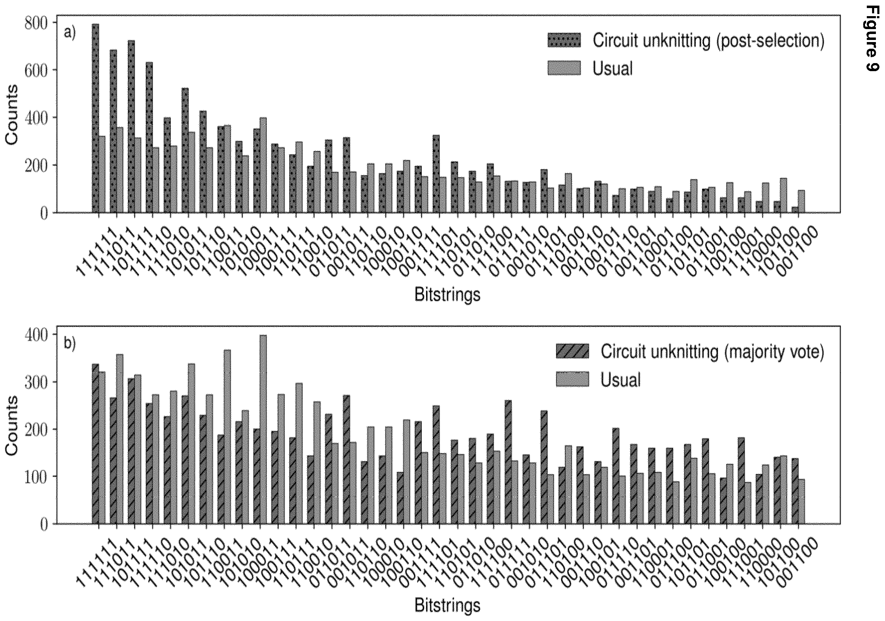

In Fig. 9, the 40 bitstrings with the lowest energies are presented, arranged from the lowest to highest energy. The comparison between circuit unknitting combined with post-selection or majority vote, in contrast to conventional encoding methods, is illustrated in panels (a) and (b), respectively. In both scenarios, circuit unknitting demonstrated a notable improvement over traditional encoding methods. It successfully obtained the system's ground state as the most populated state. Moreover, this technique yielded a higher count of low-energy states, thereby significantly enhancing the overall quality of the results.

## Figures

The figures show:

**Figure 1:** Representation of an embodiment of the invention based on a superconducting circuit chip with around 450 qubit, where the total number of qubits is divided into 9 subsystems. Here, the lines connecting the subsystems represent the additional required interactions responsible for setting the constraints that ensure that all subsystems end up in the same ground state.

**Figure 2:** Exemplary QUBO matrix encoding. The different colors highlight how the elements of the original problem QUBO matrix are distributed between the multiple subsystems. In this encoding, each anti-diagonal of the QUBO matrix is assigned to a subsystem, minimizing the number of operations for each qubit of each subsystem, maximizing the number of possible parallel operations.

**Figure 3:** Small scale scheme. $M = 3$ subsystems with $n$ qubits each. There are, in this embodiment, a total of $3n$ constraint terms to ensure qubit equality across the subsystems.

**Figure 4:** Representation of a quantum circuit. This scheme shows how one can estimate the lowest circuit depth for the usual encoding, indicating how many parallel two-qubit operations can be done in parallel and how many layers are required to apply all gates given the number of qubits available.

**Figure 5:** Error correction. Taking the measured state of the whole system, of dimension $m \times n$ as an input as an input, the individual states of each subsystem are identified. Subsequently, an error correction method is selected. In certain exemplary embodiments, one can choose between two error correction methods. In the first one, the majority vote, the final state of each qubit is chosen to be the most frequently measured state across all the subsystems. In this example, where $m = 3$ and $n = 4$, due to errors in the adiabatic quantum computation, the fourth qubit of the second subsystem ended up in the wrong state (0), but since there was no error in the other subsystems, after the majority vote, the final state is still correct. The second method consists in measuring the energy of the subsystem's states and choosing the one with the lowest energy as the result.

**Figure 6:** Flow-chart representing an embodiment of the method of the invention. A QUBO matrix is encoded into multiple subsystems distributing the operations and introduce the required constraints. Subsequently, the computation is performed and the resulting state measured. Next, a majority vote (which acts as an error correction) is performed and the result obtained.

**Figure 7:** Ground state energy of the original problem and the minimum energy obtained with an embodiment of the circuit unknitting method. The near-optimal constraint value can be estimated as the minimum value for with both energies coincide.

**Figure 8:** Circuit depth as a function of the number of qubits in each subsystem considering an all-to-all connectivity for 8 Trotter steps. These curves show the potential of circuit unknitting in the reduction of the circuit depths when compared to the usual encoding schemes.

**Figure 9:** Counts obtained from an adiabatic quantum simulation, where the results have been compared using circuit unknitting and the normal encoding, using the energy post-selection in (a), and the majority vote in (b). Here have the results for 10000 measurements ("shots"), for $m = 3$ subsystems containing $n = 6$ qubits each, $\Lambda = 1$, 8 Trotter steps for circuit unknitting and 7 for the usual encoding (rendering the same circuit depth) and an annealing time of $2\pi$. The bitstrings are sorted by energy in crescent order.

## Claims

1. Computer-implemented method for solving a combinatorial optimization problem using a digital quantum hardware, comprising

- providing the combinatorial optimization problem in a quadratic unconstrained binary optimization (QUBO) matrix or a higher-order unconstrained binary optimization (HUBO) matrix form,
- providing at least two subsystems by distributing at least a portion of the number of qubits available on the quantum hardware equally into at least two groups, wherein the number of subsystems and the number of groups is identical,
- encoding the combinatorial optimization problem from the QUBO matrix or HUBO matrix in a distributed form across the at least two subsystems such that the encoding minimizes the number of two-qubit gates using the same qubit of one and the same subsystem,
- introducing at least one constraint for qubits that force the state of each qubit present in the digital quantum hardware to be the same across each of the at least two subsystems,
- performing an adiabatic quantum computation, thereby building a time dependent Hamiltonian that starts in a ground state of an initial Hamiltonian,
- evolving the initial Hamiltonian adiabatically into a final Hamiltonian, whose ground state corresponds to the result of the problem,
- measuring a state of the qubits, wherein each qubit state is projected into a 0 or 1,
- performing an error correction on each qubit state using an error correction algorithm, and
- obtaining the solution to the combinatorial optimization problem from the corrected state of the qubits.

2. Method of claim 1, wherein the error correction algorithm is selected from the group consisting of:

- a majority vote on the measured state of each qubit across all subsystems, and
- a post-selection based on the energy of each of the at least two subsystem's final state, selecting the lowest energy state as the result.

3. Method of claim 1 or 2, wherein a number of multi-qubit gates that can be applied simultaneously in each step of computation within the coherence time of the hardware is maximized.

4. Method of any of claims 1 to 3, implemented on a single processor.

5. Method of any of claims 1 to 3, implemented on a at least two processors, wherein each of the at least two processors harbors one subsystem.

6. Method of claim 5, wherein the at least two processors are connected to each other via a quantum link.

7. Method of claim 6, wherein the quantum link is an optical fiber.

8. Method of any of claims 1 to 7, wherein the combinatorial optimization problem is provided in a Quadratic Unconstrained Binary Optimization (QUBO) matrix or a higher-order unconstrained binary optimization (HUBO) matrix by minimizing a Hamiltonian with quadratic of higher-order terms such that the quadratic unconstrained binary optimization (QUBO) matrix or the higher-order unconstrained binary optimization (HUBO) matrix can be formulated.

9. A data processing apparatus / device / system comprising means for carrying out the method of any of claims 1 to 8.

10. A computer program [product] comprising instructions which, when the program is executed by a computer, cause the computer to carry out the method of any of claims 1 to 8.

11. A computer-readable [storage] medium comprising instructions which, when executed by a computer, cause the computer to carry outthe method of any of claims 1 to 8.

**Figure 1**

**Figure 2**

$$Q = \begin{pmatrix} Q_{11}^{(1)} & Q_{12}^{(2)} & Q_{13}^{(3)} & \cdots & Q_{1n}^{(K(1,n))} \\ Q_{21}^{(2)} & Q_{22}^{(3)} & Q_{23}^{(4)} & \cdots & Q_{2n}^{(K(2,n))} \\ Q_{31}^{(3)} & Q_{32}^{(4)} & Q_{21}^{(5)} & \cdots & Q_{3n}^{(K(3,n))} \\ \vdots & \vdots & \vdots & \ddots & \vdots \\ Q_{1n}^{(K(n,1))} & Q_{2n}^{(K(n,2))} & Q_{3n}^{(K(n,3))} & \cdots & Q_{nn}^{(K(n,n))} \end{pmatrix}$$

Figure 3

Figure 4

## Figure 5

**Figure 6**

**Figure 7**

**Figure 8**

Figure 9

EP 4 571 599 A1

**EUROPEAN SEARCH REPORT**

Europäisches
Patentamt
European
Patent Office
Office européen
des brevets

**Application Number**

EP 24 16 9733

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ELIJAH PELOFSKE ET AL: "Parallel Quantum Annealing", ARXIV.ORG, CORNELL UNIVERSITY LIBRARY, 201 OLIN LIBRARY CORNELL UNIVERSITY ITHACA, NY 14853, 29 November 2022 (2022-11-29), XP091380179, DOI: 10.1038/S41598-022-08394-8 * the whole document * | 1-11 | INV. G06N10/60 G06N10/70 |
| A | ELIJAH PELOFSKE ET AL: "Solving Larger Maximum Clique Problems Using Parallel Quantum Annealing", ARXIV.ORG, CORNELL UNIVERSITY LIBRARY, 201 OLIN LIBRARY CORNELL UNIVERSITY ITHACA, NY 14853, 14 March 2023 (2023-03-14), XP091513168, DOI: 10.1007/S11128-023-03962-X * Abstract, 1. Introduction, 2. Methods * | 1-11 | |
| A | TAMEEM ALBASH ET AL: "Adiabatic Quantum Computing", ARXIV.ORG, CORNELL UNIVERSITY LIBRARY, 201 OLIN LIBRARY CORNELL UNIVERSITY ITHACA, NY 14853, 14 November 2016 (2016-11-14), XP081352615, DOI: 10.1103/REVMODPHYS.90.015002 * Abstract, II. Adiabatic theorem, III. Algorithms * | 1-11 | **TECHNICAL FIELDS SEARCHED (IPC)** G06N |

-/--

The present search report has been drawn up for all claims

| Place of search | Date of completion of the search | Examiner |
|---|---|---|
| The Hague | 1 October 2024 | Moro Pérez, Gonzalo |

EPO FORM 1503 03.82 (P04C01)

page 1 of 2

Europäisches
Patentamt

European
Patent Office

Office européen
des brevets

**EUROPEAN SEARCH REPORT**

Application Number

EP 24 16 9733

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WALTER VINCI ET AL: "Quantum annealing correction with minor embedding", PHYSICAL REVIEW A (ATOMIC, MOLECULAR, AND OPTICAL PHYSICS), vol. 92, no. 4, 1 October 2015 (2015-10-01), XP055300572, USA ISSN: 1050-2947, DOI: 10.1103/PhysRevA.92.042310 * Abstract, I. Introduction, II. Quantum annealing, minor embedding, and quantum annealing correction * | 1-11 | |

TECHNICAL FIELDS
SEARCHED        (IPC)

The present search report has been drawn up for all claims

| Place of search | Date of completion of the search | Examiner |
|---|---|---|
| The Hague | 1 October 2024 | Moro Pérez, Gonzalo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)